# FASCICULE DE BREVET EUROPEEN

(11) **EP 2 717 982 B1**
(45) Date de publication et mention de la délivrance du brevet: **04.03.2015**
(21) Numéro de dépôt: 12729679.6
(22) Date de dépôt: 07.06.2012
(51) Int. Cl.: A63F 13/214, A63F 13/24, A63F 13/98

(54) **PLATEAU DE JEU COOPÉRANT AVEC ÉCRAN DE TABLETTE NUMÉRIQUE**
SPIELBRETT IN ZUSAMMENWIRKUNG MIT BILDSCHIRM EINES TABLETTCOMPUTERS
GAMEBOARD COOPERATING WITH SCREEN OF A TABLET COMPUTER

(30) Priorité: 09.06.2011 FR 1101760
(43) Date de publication de la demande: 16.04.2014
(73) Titulaire: Les Editions Volumiques, 92240 Malakoff (FR)
(72) Inventeur: DUPLAT, Bertrand, F-87069 Limoges (FR); MINEUR, Etienne, F-87069 Limoges (FR)
(74) Mandataire: Schwalek, Valérie
(86) Numéro de dépôt international: PCT/FR2012/000226
(87) Numéro de publication internationale: WO 2012/168574

(56) Documents cités:
- WO-A2-2006/082547
- US-A1- 2007 062 852
- US-A1- 2010 081 505

## Description

La présente invention concerne un plateau de jeu physique coopérant avec les tablettes numériques à écran capacitif.

Il est connu différents plateaux de jeux qui sont réalisés à partir du pliage d'une feuille de carton. Sur ces plateaux de jeux évoluent des pions de joueurs et/ ou des cartes d'actions de jeux. L'ensemble de ces plateaux, pions, cartes sont des objets physiques qui n'ont pas de composante numérique. Il existe, de façon marginale, quelques versions de jeux sur lesquels soit le plateau, soit les pions, soit les cartes comportent une programmation numérique. Cependant, il n'existe pas encore de plateau de jeu qui s'adapte spécifiquement sur une tablette numérique.

US2007/0062852A1 divulgue un système de jeux comprenant des pions de jeu fournis avec un élément conductible représentant une signature capacitive du pion et un plateau de jeu fourni avec un capteur ou écran capacitif, ceci permettant de déterminer par couplage capacitif l'identité, la position, et l'orientation des pions déposés sur le plateau.

US2010/0081505A1 divulgue un cadre pour accueillir et se connecter à une manette de jeu portable comprenant un écran tactile, le cadre étant fourni avec des éléments de commande supplémentaires comme une croix directionnelle ou des boutons mécaniques qui augmentent les capacités de la manette.

Selon l'invention, le plateau ouvre une fenêtre sur la tablette numérique qui permet une partie de représentation de jeu qui est sous forme numérique sur l'écran de la tablette numérique. En quelque sorte, la tablette numérique devient une continuité perfectionnée du plateau.

Un objet principal de l'invention est de proposer un plateau de jeu qui permette un déplacement physique des cartes et ou des pions sur le plateau de jeu et / ou sur l'écran de la tablette numérique et qui affiche ensuite interactivement des informations corrélées sur la tablette numérique.

Un objet de l'invention est de pouvoir détecter la présence et/ou l'identité de pions et / ou de cartes tant sur le plateau de jeu que l'écran capacitif de la tablette numérique.

Un objet de l'invention est de s'adapter facilement à des éditions de jeux de société existants.

Un objet de l'invention est de proposer un plateau de jeu qui soit économique et qui soit facilement industrialisable.

Dans un aspect principal, l'invention comprend un plateau de jeu qui est une feuille de jeu d'une forme particulière et qui comprend un réseau conducteur qui permet l'interactivité entre la tablette numérique et les pions de joueurs posés sur le plateau de jeu.

Dans un aspect, l'invention utilise des pions conducteurs à semelle conductive à signature. L'électricité statique est transmise depuis le corps du joueur à travers le pion puis à travers le plateau et enfin sur l'écran conducteur de la tablette numérique.

Dans un autre aspect, l'identité du pion est d'abord reconnue sur l'écran capacitif de la tablette numérique. Le pion est ensuite posé sur la zone de signature, qui transmet alors à la tablette numérique l'information de la dépose d'un pion sur cette zone.

Dans un aspect, le plateau de jeu comprend des zones d'authentification de pions qui transmettent les coordonnées des pions à la tablette numérique.

Dans un aspect, le plateau comprend une fenêtre d'ouverture dans laquelle se loge la tablette numérique.

Dans un aspect la fenêtre d'ouverture est réalisée en matériau transparent qui comprend un maillage de réseau conducteur qui est relié au plateau. Dans cette variante, les pions qui seront posés sur la fenêtre conductrice seront reconnus par la tablette.

Les figures annexées représentent un mode particulier de l'invention sur lesquelles :
- La figure 1 représente une tablette numérique
- La figure 2 représente une vue de dessus du plateau de jeu selon l'invention
- La figure 3 représente une première disposition de connectivité selon l'invention
- La figure 4 représente une signature de pion selon la première disposition de l'invention
- La figure 5 représente une seconde disposition de connectivité selon l'invention
- La figure 6 représente une seconde disposition de signature de pion selon l'invention
- Les figures 7 et 8 représentent des moyens de solidarisation entre le plateau de jeu et la tablette numérique

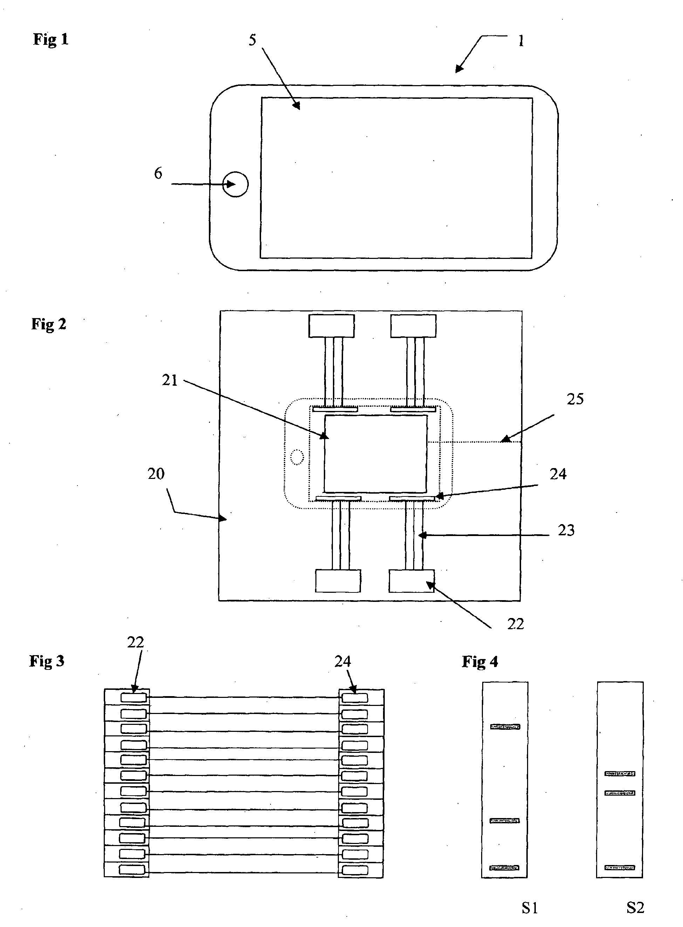

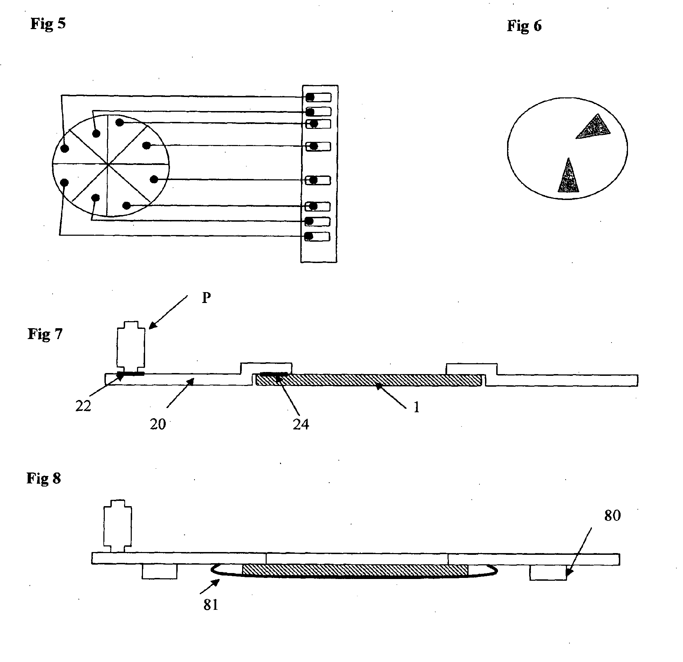

La figure 1 représente une tablette numérique (1) qui comprend un écran capacitif (5) et un bouton de pilotage d'interface graphique (6) qui coopère avec l'action des doigts de l'utilisateur sur l'écran capacitif pour piloter l'interface graphique de la tablette numérique (1). La figure 2 représente une vue de dessus du plateau de jeu (20). Le plateau de jeu (20) peut être réalisé à partir des plateaux de jeux de type courants, comme par exemple ceux en feuille cartonnée pliable, voir pliure (25). Une première spécificité du plateau de jeu est qu'il comprend une fenêtre (21) d'ouverture, dont les bords de fenêtres viennent se caler sur les bords de l'écran capacitif (5) de la tablette numérique (1). Dans le cas de la figure 2, la fenêtre est un rectangle dont l'ouverture est au format très légèrement plus petite que celui de l'écran capacitif de la tablette numérique. Ce format permet de maximiser la taille de l'écran qui reste encore visible par les utilisateurs tout en assurant une zone de contact conductrice et de transmission d'information électrique entre le plateau de jeu et l'écran capacitif. Bien évidemment pour bien caler avec précision le plateau de jeu sur la tablette numérique, un système de calage est monté sur le jeu qui permet une solidarisation temporaire de façon à supporter les mouvements des joueurs qui ne viendraient pas inopportunément déplacer la position du plateau sur la tablette. Le système de calage permet également un contact permanent entre le plateau de jeu et l'écran de la tablette numérique. En figure 7 est représenté un calage qui est réalisé à partir d'un plateau qui comprend une encoche de calage sous le pourtour du bord de la fenêtre. En figure 8 est représentée une solution qui propose un système de cale de mise à niveau (80) du plateau et un dispositif de maintien mécanique (81) du plateau de jeu contre l'écran de la tablette. Dans une autre version de plateau de jeu, la fenêtre (21) peut être positionnée en bord de plateau de jeu (20). L'intérêt d'une fenêtre positionnée au centre du plateau de jeu (20) est qu'elle permet de conserver l'ergonomie de plateau de jeu multi joueurs tous positionnés autour du plateau. Le plateau comprend sur la surface de jeu du plateau des zones d'authentification (22) qui sont reliées par un circuit conducteur (23) à des zones de transmission plateau / écran (24) positionnées sou le plateau en bord de fenêtre d'ouverture (24) de plateau. La figure 3 représente une première disposition de connectivité selon l'invention avec une zone d'authentification (22) qui comprend un alignement de cases, isolées les unes des autres, chaque case comprend une zone conductrice. Chaque case ensuite reliée par un fil conducteur à un case positionnée en bord de plateau sur la zone de transmission (24). Selon cette version, la semelle de signature de pion (P) comprend une série de case alignée sur le modèle de la zone d'authentification de la figure 3. Voir Signature S1 et S2 de deux pions de joueurs différents en figure 4. Certaines cases sont reliées de façon conductrices à la zone de préhension du pion (P). D'autres cases ne le sont pas. En venant saisir le pion et en l'appliquant sur la zone d'authentification (22), l'utilisateur transmet donc une information à certaines cases précises de la zone de transmission (24) ce qui constitue une signature qui est alors interprété par le logiciel de reconnaissance de la tablette numérique. Les figures 5 et 6 représentent une seconde disposition de connectivité selon l'invention, avec cette fois des cases qui ne plus alignées mais qui sont disposées en arc de cercle sur la zone d'authentification (22) et qui correspondent la typologie de signature de semelles des pions (P), voir figure 6. Chaque case est ensuite reliée électriquement et de façon isolé de toutes les autres cases à une série de cases alignées sur la zone de transmission dont le logiciel de traitement de la tablette reconnaît alors la signature des pions selon la répartition particulières des cases qui sont activées électriquement.

La présente invention concerne donc un plateau de jeu (20) multi joueur, les joueurs ou les actions de joueurs sont identifiés par des pions (P) ou des cartes, les pions (P) sont conducteurs et comprennent une semelle authentification (S) interprétée par le logiciel d'un écran capacitif (5) d'une tablette numérique (1) caractérisé en ce que le plateau de jeu (20) comprend une fenêtre d'ouverture (21), les bords de la fenêtre d'ouverture (21) viennent se caler contre les bords de l'écran capacitif (5) de la tablette numérique (1), le contact entre le plateau de jeu et l'écran se fait sur des zones de transmission (24) qui sont reliées électriquement à des zones d'authentification (22) de pion sur la surface du plateau de jeu (20).

La présente invention concerne donc un plateau de jeu (20) multi joueur caractérisé en ce que la zone d'authentification (22) comprend un alignement de cases, isolées les unes des autres, chaque case comprend une zone conductrice, chaque case ensuite reliée par un fil conducteur à un case positionnée en bord de plateau sur la zone de transmission (24).

La présente invention concerne donc un plateau de jeu (20) multi joueur caractérisé en ce que la zone d'authentification (22) comprend des cases disposées en arc de cercle sur la zone d'authentification (22) et qui correspondent la typologie de signature de semelles des pions (P), chaque case est ensuite reliée électriquement et de façon isolée de toutes les autres cases à une série de cases alignées sur la zone de transmission (24) dont le logiciel de traitement de la tablette reconnaît alors la signature des pions (P) selon la répartition particulières des cases qui sont activées électriquement.

## Revendications

1. Plateau de jeu (20) multi joueur, les joueurs ou les actions de joueurs sont identifiés par des pions (P) ou des cartes, les pions (P) sont conducteurs et comprennent une semelle authentification (S) interprétée par le logiciel d'un écran capacitif (5) d'une tablette numérique (1) **caractérisé en ce que** le plateau de jeu (20) comprend une fenêtre d'ouverture (21), les bords de la fenêtre d'ouverture (21) viennent se caler contre les bords de l'écran capacitif (5) de la tablette numérique (1), le contact entre le plateau de jeu et l'écran se fait sur des zones de transmission (24) qui sont reliées électriquement à des zones d'authentification (22) de pion sur la surface du plateau de jeu (20).

2. Plateau de jeu (20) multi joueur selon la revendication 1 **caractérisé en ce que** la zone d'authentification (22) comprend un alignement de cases, isolées les unes des autres, chaque case comprend une zone conductrice, chaque case ensuite reliée par un fil conducteur à un case positionnée en bord de plateau sur la zone de transmission (24).

3. Plateau de jeu (20) multi joueur selon la revendication 1 **caractérisé en ce que** la zone d'authentification (22) comprend des cases disposées en arc de cercle sur la zone d'authentification (22) et qui correspondent la typologie de signature de semelles des pions (P), chaque case est ensuite reliée électriquement et de façon isolée de toutes les autres cases à une série de cases alignées sur la zone de transmission (24) dont le logiciel de traitement de la tablette reconnaît alors la signature des pions (P) selon la répartition particulières des cases qui sont activées électriquement.

## Patentansprüche

1. Spielbrett (20) für mehrere Spieler, wobei die Spieler oder die Aktionen der Spieler durch Spielfiguren (P) oder Karten identifiziert werden, wobei die Spielfiguren (P) leitend sind und eine Authentifizierungs-Sohle (S) aufweisen, welche von der Software eines kapazitiven Bildschirms (5) eines Digitalisiertabletts (1) interpretiert wird, **dadurch gekennzeichnet, dass** das Spielbrett (20) ein Öffnungsfenster (21) umfasst, wobei die Ränder des Öffnungsfensters (21) an den Rändern des kapazitiven Bildschirms (5) des Digitalisiertabletts (1) festgeklemmt werden, wobei der Kontakt zwischen dem Spielbrett und dem Bildschirm auf Übertragungsbereichen (24) erfolgt, welche mit Authentifizierungsbereichen (22) für Spielfiguren auf der Oberfläche des Spielbretts (20) elektrisch verbunden sind.

2. Spielbrett (20) für mehrere Spieler nach Anspruch 1, **dadurch gekennzeichnet, dass** der Authentifizierungsbereich (22) eine Anzahl von in einer Reihe angeordneten Feldern umfasst, die voneinander isoliert sind, wobei jedes Feld einen leitenden Bereich umfasst, wobei jedes Feld dann durch einen leitenden Draht mit einem Feld verbunden wird, das am Brettrand auf dem Übertragungsbereich (24) positioniert ist.

3. Spielbrett (20) für mehrere Spieler nach Anspruch 1, **dadurch gekennzeichnet, dass** der Authentifizierungsbereich (22) Felder umfasst, die kreisbogenförmig auf dem Authentifizierungsbereich (22) angeordnet sind und die der Signaturtypologie von Sohlen der Spielfiguren (P) entsprechen, wobei jedes Feld dann, isoliert von allen anderen Feldern, mit einer Reihe von auf dem Übertragungsbereich (24) aufgereihten Feldern verbunden wird, wobei die Verarbeitungssoftware des Tabletts dann die Signatur der Spielfiguren (P) anhand der spezifischen Verteilung der Felder, welche elektrisch aktiviert sind, erkennt.

## Claims

1. Multi-player game board (20), the players or players' actions are identified by game pieces (P) or cards, the game pieces (P) are conductive and comprise an authentication base (S), which is interpreted by the software of a capacitive screen (5) of a digital tablet (1), **characterised in that** the game board (20) comprises an opening window (21), the edges of the opening window (21) are retained against the edges of the capacitive screen (5) of the digital tablet (1), the contact between the game board and the screen is established on transmission regions (24) which are electrically connected to corresponding game piece authentication regions (22) on the surface of the game board (20).

2. Multi-player game board (20) according to claim 1, **characterised in that** said authentication region (22) comprises a line of spaces which are each insulated from one another, each space comprises a conductive region and each space is then connected by a conductive wire to a space positioned at the board edge on said transmission region (24).

3. Multi-player game board (20) according to claim 1, **characterised in that** the authentication region (22) comprises spaces which are arranged in a circular arc on the authentication region (22) and which correspond to the signature typology of the bases of the game pieces (P), each space is then electrically connected, so as to be insulated from all the other spaces, to a series of spaces aligned on said transmission region (24), the processing software of the tablet then recognising the signature of said game pieces (P) according to the specific distribution of the electrically activated spaces.
